# EUROPEAN PATENT SPECIFICATION

(11) **EP 3 992 677 B1**
(45) Date of publication and mention of the grant of the patent: **11.11.2026**
(21) Application number: 20831441.9
(22) Date of filing: 27.05.2020
(51) Int. Cl.: G02B 5/30

(54) **POLARIZING ELEMENT HAVING WIRE GRID STRUCTURE AND METHOD FOR MANUFACTURING SAME**
POLARISATIONSELEMENT MIT DRAHTGITTERSTRUKTUR UND VERFAHREN ZU DESSEN HERSTELLUNG
POLARISEUR POSSÉDANT UNE STRUCTURE DE GRILLE DE FIL, ET PROCÉDÉ DE FABRICATION DE CELUI-CI

(30) Priority: 26.06.2019 JP 2019118749
(43) Date of publication of application: 04.05.2022
(73) Proprietor: NATIONAL INSTITUTE OF ADVANCED INDUSTRIAL SCIENCE AND TECHNOLOGY, Chiyoda-ku Tokyo 100-8921 (JP)
(72) Inventor: HOKARI Ryohei, Tsukuba-shi, Ibaraki 305-8560 (JP); KURIHARA Kazuma, Tsukuba-shi, Ibaraki 305-8560 (JP)
(74) Representative: Schäfer, Matthias W.
(86) International application number: PCT/JP2020/020986
(87) International publication number: WO 2020/261856

(56) References cited:
- WO-A1-2010/090085
- JP-A- 2008 522 221
- JP-A- 2012 013 806
- JP-A- 2012 168 531
- JP-A- 2015 075 746
- US-A1- 2005 146 720
- US-A1- 2015 028 296
- US-A1- 2016 299 380

## Description

### TECHNICAL FIELD

The present invention relates to a polarization element having a wire-grid structure and a method for manufacturing the same.

### BACKGROUND ART

In order to improve the functionality and design of products comprising a polarization element such as liquid crystal displays, polarizing screens and polarizing sunglasses, there is an increasing demand for gradient polarization elements having the gradation of a polarization function within the plane of a polarization element. For example, in automobile head-up displays, the lower part of a polarizing screen has the function of displaying information clearly, and there is a need for elements that can ensure a gradually better view toward the top of the polarizing screen.

Wire-grid polarization elements are known as polarization elements (see, for example, Patent Documents 1 and 2). The wire-grid polarizing elements achieve polarization control by forming a line pattern having a size smaller than the wavelength of incident light from a metal material such as aluminum.
US 2005/146720 A1 discloses a method in which an undesired characteristic of a modified beam is compensated for by a wire-grid polarizer having a plurality of elongated elements with at least a portion that continuously transitions to a different characteristic corresponding to the undesired characteristic of the modified beam in order to absorb undesired polarized light properly and not to transmit it therethrough.
US 2016/299380 A1 discloses a wire grid polarizer disposed on a first substrate and comprising a first region and a second region spaced apart from each other by a stitch line, wherein the stitch line comprises a shape of a curved line or a series of straight lines connected by bends in order to prevent a display defect which occurs when the stitch line is generated at a connection part between the small area wire grid polarizers and light leakage occurs at the connection part, which might be recognized by a LCD display viewer.
US 2015/28296 A1 discloses that a first spacing between each pair of a plurality of wire grids in a first region of a base substrate and a second spacing between each pair of a plurality of wire grids in a second region of the base substrate are made different in order to improve the uniformity of brightness and reduce a colour change phenomenon according to a viewing angle.

### PRIOR ART DOCUMENT

### PATENT DOCUMENT

Patent document 1: JP 2013-024982A
Patent document 2: JP 2017-173760A

### SUMMARY OF THE INVENTION

### PROBLEMS TO BE SOLVED BY THE INVENTION

In the wire-grid polarization element, polarization characteristics such as polarization degree, light transmittance, reflectance, polarization direction and the like
are determined by the metal material of a wire, wire width, wire interval and wire height.

Since conventional wire-grid polarizing elements are fabricated by a combination of electron beam lithography, etching, vacuum film deposition, nanoimprinting and the like, it has been difficult to fabricate them by varying the height of the wire in plane space, which determines the polarization characteristics in order to provide a gradation function.

It is an object of the present invention to provide a polarizing element having a gradation function that at least one of light transmittance and polarizing degree is continuously or stepwise changed, and a method for manufacturing the same.

### MEANS FOR SOLVING THE PROBLEM

According to one aspect of the present invention, there is provided a polarizing element having the features of claim 1.

According to the above aspect, since the plurality of polarization portions having a wire-grid structure and portions of the substrate other than the polymerization portions are formed on the main surface of the substrate and the plurality of polarization portions are arranged to ensure that the ratio per the predetermined area of the main surface, that is, the ratio of the total area of the polarization portions to the total area of the substrate portions gradually changes along the predetermined direction on the main surface of the substrate, at least one of light transmittance and polarization degree gradually changes. Thereby, a gradation function for at least one of light transmittance and polarization degree can be provided.

According to another aspect of the present invention, there is provided a method for manufacturing a polarizing element having the features of claim 8.

According to the above aspect, the plurality of polarization portions are formed based on the design data for arranging the plurality of polarization portions having a wire-grid structure on the main surface of the substrate to ensure that the ratio of the total area of the polarization portions to the predetermined area of the main surface of the substrate gradually changes along the predetermined direction, thereby making it possible to form a polarizing element having a gradation function for at least one of light transmittance and polarization degree along the predetermined direction.

According to one embodiment of the present invention, the wire-grid structure of the plurality of polarizations portions, which may, each, be formed in a predetermined shape, may comprise conductive wires arranged in a slit-shape, and the conductive wires may be arranged in a predetermined direction in the plurality of regions.

### BRIEF DESCRIPTION OF THE DRAWINGS

Figures 1(a) to 1(c) are a plan view and partial enlarged views of a gradient polarizing element according to one embodiment of the present invention.
Figures 2(a) and 2(b) are enlarged plan and cross-sectional views of the polarization portion having a wire-grid structure.
Figures 3(a) and 3(b) are enlarged cross-sectional views of variations of the polarization portion having a wire-grid structure.
Figure 4 is an enlarged plan view of a variation of the gradient polarization element according to another embodiment of the present invention.
Figures 5(a) to 5(f) show a process for manufacturing a gradient polarization element according to one embodiment of the present invention.
Figures 6(a) to 6(e) show another process for manufacturing a gradient polarization element according to another embodiment of the present invention.
Figure 7 is a scanning microphotograph of a mold for a gradient polarizing element as an example.
Figures 8(a) to 8(c) are scanning microphotographs of gradient polarization elements as examples.
Figure 9 is a table showing the optical characteristics of a gradient polarizing element as an example.

### EMBODIMENTS OF CARRYING OUT THE INVENTION

Hereinafter, embodiments of the present invention will be described based on the drawings below. The same signs are applied to elements common to multiple drawings, and repetitions of the detailed descriptions of the elements are omitted.

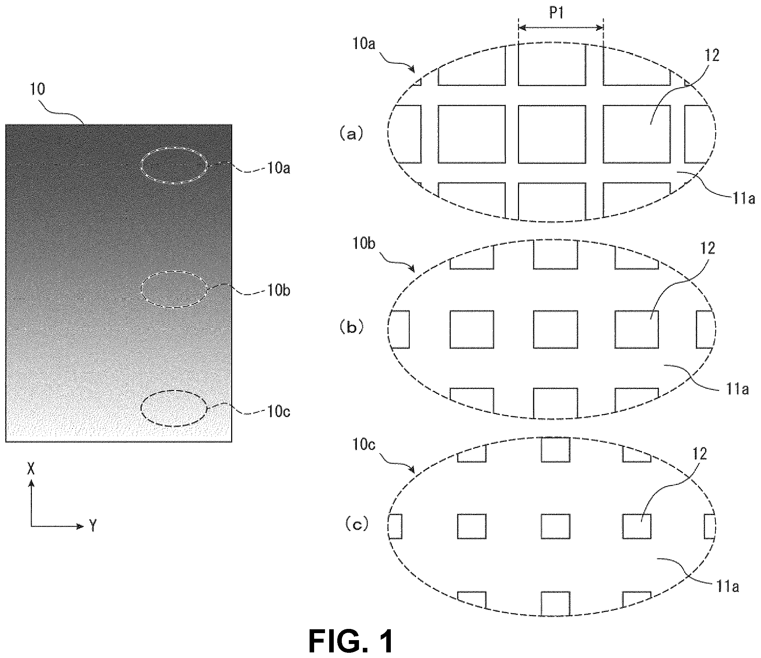

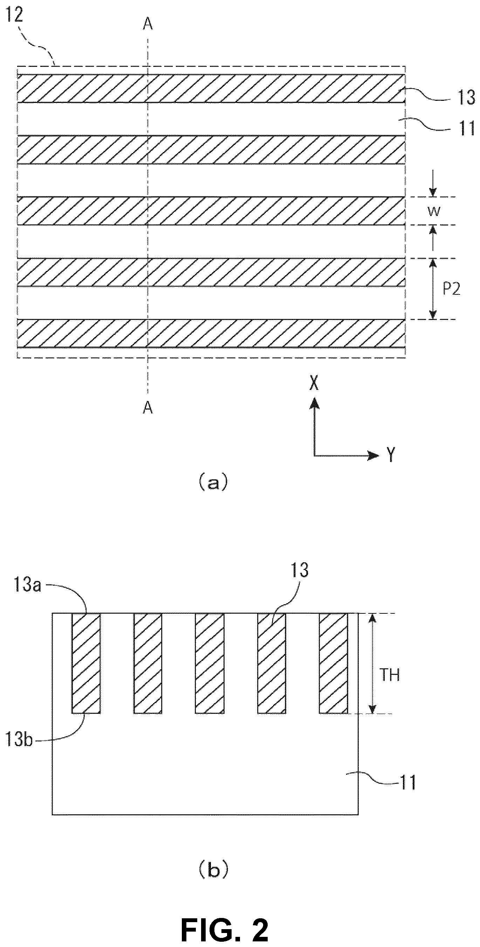

Figures 1(a) to 1(c) are a plan view and partial enlarged views of a gradient polarizing element according to one embodiment of the present invention, and the left figure is a plan view and Figure 1(a) to 1(c) are partial enlarged views of three parts where the polarization degree gradually changes along the X axis. Figures 2(a) and 2(b) show a polarization portion, wherein Figure 2(a) is a plan view and Figure 2(b) is a cross-sectional view taken along line A-A shown in Figure 2(a).

Referring to Figures 1(a) to 1(c), the gradient polarization element 10 has a substrate 11 and a plurality of polarization portions 12 formed on the surface of the substrate 11.

In the gradient polarization element 10, the polarization portions 12 are arranged in such a way that the polarization degree gradually decreases from the top to the bottom of the paper along the X-axis direction.

A material having transparency (predetermined light transmittance) in a wavelength region in which the gradient polarization element 10 is used, for example, a visible light region, an infrared light region or the like may be used for the substrate 11.

The substrate 11 can be made of, for example, polymethyl methacrylate resin (PMMA), polycarbonate resin (PC), polystyrene (PS) resin, cyclo-olefin polymer (COP) resin, cross-linked polyethylene resin, polyvinyl chloride resin, polyarylate resin, polyphenylene ether resin, modified polyphenylene ether resin, polyetherimide resin, polyethersulfone resin, polysulfone resin, polyetherketone resin and other amorphous thermoplastic resins, polyethylene terephthalate (PET), polyethylene naphthalate resin, polyethylene resin, polypropylene rein, polybutylene terephthalate resin, aromatic polyester resin, polyacetal resin, polyamide resin and other crystalline thermoplastic resins, acrylic, epoxy, urethane and other UV curable resins and thermosetting resins, triacetate (TAC) resin, and glass, silicon, quartz, ceramic materials and other inorganic base materials.

Although the substrate 11 composed of a single layer of one of the above materials is preferred as it is easy to bend it, a substrate composed of multiple layers or a substrate made of a combination of different materials may also be used.

The polarization portion 12 comprises a plurality of metal portions 13 which extend in one direction, e.g., the Y-axis direction, are periodically arranged at predetermined intervals in the X-axis direction and have a predetermined thickness. In this example, the metal portions 13 are embedded in the substrate 11.

Even if the wavelength range in which the gradient polarizer 10 is used is the visible light range or other wavelength ranges, such as the ultraviolet, near-infrared, infrared, terahertz, and microwave ranges, the width w (length in the X-axis direction) of the metal portion 13 is preferably about 1/2 or less of the wavelength of the electromagnetic wave to be targeted, and more preferably about 1/16 to 1/4.

Although light transmittance becomes higher as the pitch P2 (distance in the X-axis direction between adjacent metal portions 13) of the metal portions 13 relative to the width w becomes larger, the pitch P2 is preferably 1.2 to 10 times the width w and more preferably 2 to 5 times the width w in view of balance between the polarization degree and the light transmittance. Since the polarization degree tends to become higher as the thickness TH of the metal portion 13 becomes larger, the thickness TH is preferably 1 time or more the width w and more preferably 7 to 30 times.

When the gradient polarizing element 10 is used in the visible light range, the width w of the metal portion 13 is preferably 200 nm or less and more preferably 25 to 100 nm, the pitch P2 is preferably 400 nm or less and more preferably 50 to 150 nm (the pitch P2 is preferably 1.2 to 10 times and more preferably 2 to 5 times the width w), and the thickness TH is preferably 50 nm or more and more preferably 200 to 1,000 nm.

. The cross-sectional shape of the metal portion 13 in the thickness direction may be rectangular as shown in Figure 2(b) or a bullet shape ( round shape), oval shape, rhombus shape, or a shape similar thereto. The upper surface 13a or the lower surface 13b in the thickness direction of the metal portion 13 may be flat, tapered, round or uneven.

The metal portion 13 should be made of a metal material having a negative real part of dielectric constant in the wavelength range to be used.

For example, a highly reflective metal material such as aluminum, gold, silver, copper, platinum, etc., or a low reflective metal material such as molybdenum, nickel, chromium, titanium, tungsten, tantalum, zirconium, iron, niobium, hafnium, cobalt, etc., and alloys thereof can be used for the metal portion 13. In addition, other metallic materials can also be used.

Returning to Figures 1(a) to 1(c), in the gradient polarization element 10, a large number of polarization portions 12 are arranged on one surface of the substrate 11 in such a manner that they are spaced apart or adjacent to each other. In the gradient polarizing element 10, polarization degree and light transmittance are controlled by the ratio of the total area of the polarization portions 12 to the total area of substrate portions 11a other than the polarization portions (to be simply referred to as "substrate portions 11a" hereinafter), i.e., the area ratio of the total area of the plurality of polarization portions 12 included per unit area to the total area of the substrate portions 11a.

In other words, polarization degree and light transmittance are controlled by the ratio of the total area of the plurality of polarization portions 12 included per unit area of the gradient polarization element 10 (to be referred to as "polarization portion occupancy ratio (%)" hereinafter). The polarization portion occupancy ratio is the ratio of the area occupied by one polarization area 12 in one cycle of the array when the plurality of polarization portions 12 are of the same shape and size and are regularly arranged.

In each of the polarization portions 12 of the gradient polarization element 10, the wire-grid structure transmits electric field light perpendicular to the longitudinal direction of the metal portion 13 (Y-axis direction shown in Figures 2(a) and 2(b)) and does not transmit electric field light parallel to the longitudinal direction.
Thereby, the light transmittance of each polarization portion 12 is determined. It is assumed herein that the wire-grid structures of the polarization portions 12 have the same width w, same pitch P2 and same thickness TH, and the polarization portions 12 have the same light transmittance.

In Figures 1, region 10a with relatively low light transmittance, region 10b with intermediate light transmittance, and region 10c with relatively high light transmittance shown in the left figure are shown in Figures 1(a), 1(b) and (c), respectively.

In region 10a, the polarization portion occupancy ratio, i.e., the ratio of the area occupied by one polarization portion 12 in one cycle of the array (=area of one polarization area 12/(total area of one polarization portion 12 and substrate portion 11a) x 100) is 60%.

Since the size of each polarization portion 12 in region 10b is smaller than that of the polarization portion 12 in region 10a and the total area of the substrate portions 11a increases accordingly, the polarization portion occupancy ratio becomes 25%.

Since the size of each polarization portion 12 in region 10c is much smaller in region 10a and the total area of the substrate portions 11a increases accordingly, the polarization portion occupancy ratio becomes 10%.

Thus, the gradient polarizing element 10 gradually changes the polarization portion occupancy ratio along the X-axis direction to form the gradations of polarization degree and light transmittance.

In each of the regions 10a to 10c arranged in the gradient polarization element 10, the polarization portions 12 are rectangular in a plan view and regularly arranged in the same shape and the same size. It is to be noted that, even in different regions, the number per unit area of the polarization portions 12 having the same shape and the same size may be varied for each of the regions 10a to 10c in order to achieve a desired polarization portion occupancy ratio.

Although there are no restrictions on the shape of the polarization portion 12 in a plan view, it may be a square, rectangle, circle, oval, diamond-shaped, triangle, polygon such as a star, or complex shape such as a crescent, and it is preferably a square or circle from the viewpoint of structural isotropy.

The size of each of the polarization portions 12 in a plan view is preferably 1µm to 1mm and more preferably 1µm to 200µm, in the longitudinal direction and the transverse direction.

There is no restriction on the arrangement of the polarization portions 12, and they should be arranged in two dimensions, for example, hexagonally, at arbitrary intervals.

As shown in Figures 1 (a) to (c), it is preferable from the viewpoint of structural isotropy that the polarization portions 12 should be square-arrayed regularly in the X-axis and Y-axis directions.

The polarization portions 12 may be in contact with adjacent polarization portions 12 or separated from each other with the substrate portions 11a therebetween. It is preferable from the viewpoint of the control of polarization degree and light transmittance that adjacent polarization portions 12 should be separated from each other.

When adjacent polarization portions 12 are in contact with each other, the polarization characteristics of the polarization portions 12 function as they are. The pitch P1 of the adjacent polarization portions 12 (i.e., the distance between the adjacent polarization portions 12) is preferably from 1µm to 1mm and more preferably from 10µm to 200µm from the viewpoint of manufacturing and visibility.

The pitch P1 of the polarization portion 12 may be a constant value or may be changed and should be selected from a range of 1 µm to 1 mm in each of the regions 10a to 10c.

The polarization portions 12 may have the same wire-grid structure, different wire-grid structures or wire-grid structures of different sizes in the gradient polarizing element 10, and it is preferred that the polarization portions 12 should have the same wire-grid structure in terms of ease of manufacture.

Preferably, 1 to 4 million polarization portions 12 are formed per 1 mm² of the main surface of the gradient polarization element 10. In this case, each of the polarization portions 12 should have an area of 1 x 10⁻⁶ mm² to 1 mm², and the polarization portion occupancy ratio is 1 x 10⁻⁴ to 100 %.

From the viewpoint of controlling polarization degree and the light transmittance, it is more preferable that 1 to 400 polymerization portions 12 should be formed per 1 mm².

In addition to a case where the polarization degree and light transmittance of the gradient polarizing element 10 gradually change along the X-axis direction shown in Figures 1(a) to 1(c), a periodic gradation may be formed in which polarization degree and light transmittance increase and decrease repeatedly along a certain direction in a single gradient polarizing element, there may be discontinuous portions in the gradation, and the polarization portions 12 may be arranged only in part of the gradient polarizing element to form the gradations of polarization degree and light transmittance.

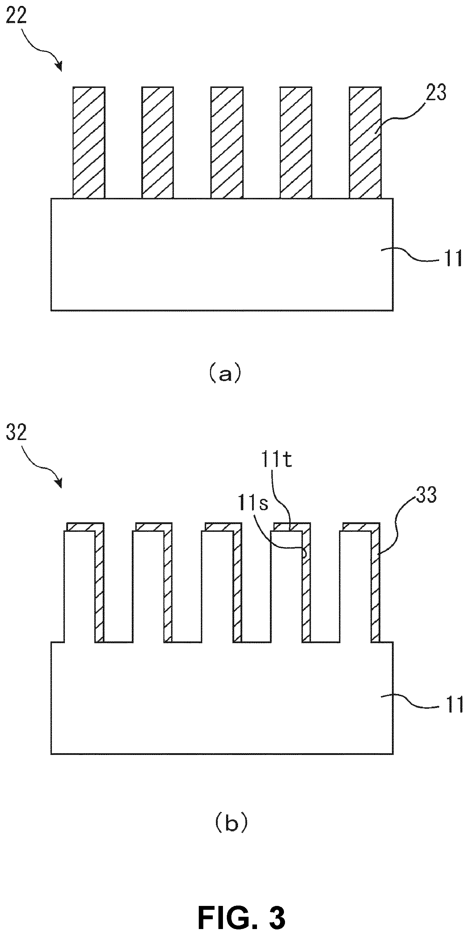

Figures 3(a) and 3(b) are enlarged cross-sectional views of variations of the polarization portion having a wire-grid structure. Referring to Figure 3(a), the polarization portion 22 of one of the variations has a wire-grid structure. The polarization portion 22 has a configuration in which metal portions 23 are formed on the substrate 11. Except that, it has the same wire-grid structure as that of the polarization portion 12 shown in Figure 2(a) and 2(b).

Referring to Figure 3 (b), the polarization portion 32 of the other variation has a wire-grid structure. The polarization portion 32 has a configuration in which metal portions 33 are formed to cover one side wall 11s of each groove formed in the substrate 11 and the substrate surface 11t contiguous thereto. Except that, it has the same wire-grid structure as that of the polarization portion 12 shown in Figures 2(a) and 2(b). These polarization portions 22 and 32 have the same action and effect as the polarization portion 12 shown in Figures 2(a) and 2(b).

According to this embodiment, in the gradient polarizing element 10, a large number of polarization portions 12 and substrate portions 11a other than the polarization portions 12 are formed on the surface of the substrate 11, and the polarization portions 12 having optical characteristics such as certain polarization degree and light transmittance are arranged on the surface of the substrate 11 to control the polarization portion occupancy ratio which differs in each of the regions, whereby average optical characteristics such as polarization degree and light transmittance are determined for each of the regions. The gradient polarizing element 10 having polarization degree and light transmittance which change along the X-axis direction is formed by changing the polarization portion occupancy ratio gradually or stepwise along the X-axis direction.

That is, although the polarization portions 12 differ from the substrate portions 11a other than the polarization portions 12 in polarization degree microscopically, if a light flux transmitted through the gradient polarizing element 10 is sufficiently larger than the size of the unit configuration of the polarization portion 12 and the substrate portion 11a, the transmitted light will be affected by the average optical properties of the gradient polarization element 10

As an alternative example, the gradient polarizing element 10 may have a configuration in which the polarization portions 12 and the substrate portions 11a are exchanged. That is, the wire-grid structure is formed in the substrate portions 11a shown in Figures 1(a) to 1(c), and the polarization portions 12 are changed to non-polarization portions having no polarizing function.

As a result, the gradient polarization element of the alternative example forms gradation in which at least one of polarization degree and light transmittance along the X-axis direction of the gradient polarization element 10 shown in Figures 1(a) to 1(c) decreases from the bottom to the top of the paper.

In the gradient polarizing element of the alternative example, the polarization portions12 having a wire-grid structure may be formed over the entire surface of the substrate 11, the non-polarization portions may be formed by removing the wire-grid structures of the polarization portions 12 shown in Figures 1(a) to 1(c), and the non-polarization portions may be a hole penetrating the substrate.

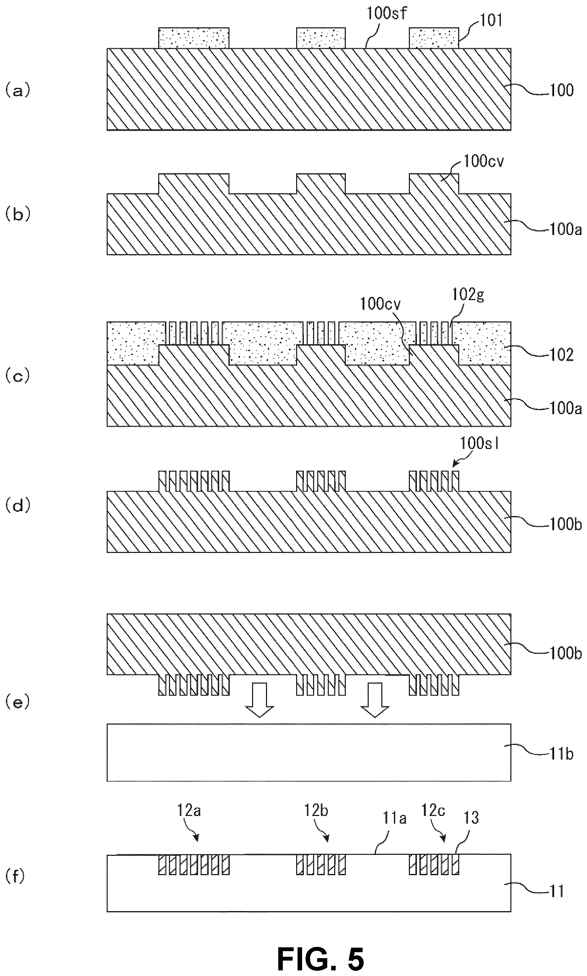

The gradient polarizing element of the alternative example may be constituted such that the pattern 100sl of the metal portions of the polarization portions of a mold 100b shown in Figures 5(d) to 5(e) which will be described hereinafter is used to form the polarization portions and the non-polarization portions of the gradient polarizing element of this alternative example.

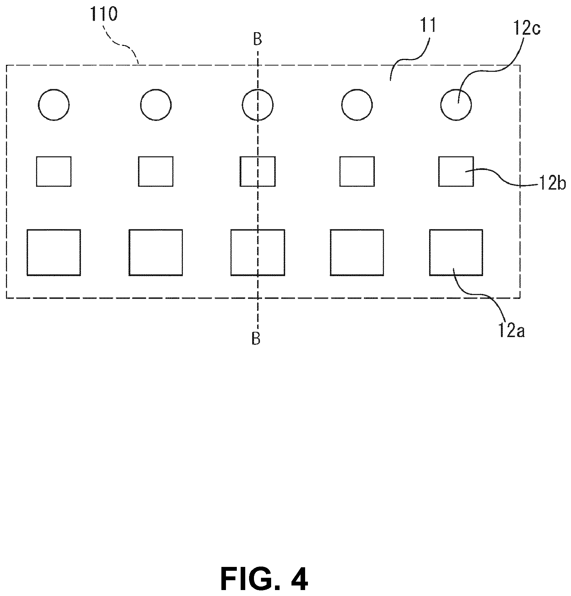

Figure 4 is an enlarged plan view of a variation of the gradient polarizing element according to another embodiment of the present invention and shows part of the variation of the gradient polarizing element. Referring to Figure 4, the gradient polarization element 110 has rectangular polarization portions 12a and 12b and round polarization portions 12c separated from the polarization portions 12a and 12b on part of the surface of the substrate 11.

The manufacturing process of the gradient polarization element 110 will be explained with reference to BB line cross-sectional views of Figure 4.

Figures 5(a) to 5(f) are diagrams showing the manufacturing process of the gradient polarizing element according to one embodiment of the present invention.

Figures 5(f) is a BB line cross-sectional view of the above Figure 4. Referring to Figures 5(a) to 5(f) together with the above Figures 1(a) to 1(c), 2(a) and 2(b) and 4, the manufacturing process of the gradient polarizer according to one embodiment of the present invention will be described below.

This manufacturing process includes a design data preparation step in which the specifications and arrangement of the polarization portions are determined based on the polarization portion occupancy ratio of the polarization portions 12 in each region along a predetermined direction to achieve a desired gradation function and a polarization portion forming step in which the polarization portions 12 are formed on a substrate based on the design data. The polarization portion forming step includes a mold fabrication sub-step, an imprinting sub-step and a printing sub-step for forming polarization portions having a wide-grid structure by using the fabricated mold.

Prior to the step of Figure 5(a), design data for determining the specifications and arrangement of the polarization portions based on the polarization portion occupancy ratio of the polarization portions 12 of each region along a predetermined direction is created to achieve a desired gradation function. Specifically, at least one of the polarization degree and the light transmittance of each region along the predetermined direction is set so that the desired gradation function is formed.

Arithmetic operation is carried out from data on the average visual transmittance in each direction obtained corresponding to the polarization portion occupancy ratio of the polarization portions 12 based on data on the visual transmittance in each polarization direction obtained by the width w, pitch P2 and thickness TH of the metal portions of the wire-grid structure of the polarization portion 12. Thereby, design data for determining the arrangement of the polarization portions 12 and design data for determining the specifications such as width w, pitch P2 and thickness TH of the metal portions of the wire-grid structure of the polarization portion 12 are created.

In the step shown in Figure 5(a), a photosensitive resin layer is formed on the base material to be used as a mold. Then, the exposure processing of the photosensitive resin layer is performed by lithography based on the prepared design data for determining the shape of the polarization portion and the polarization portion occupancy ratio of the polarization portions to form a gradation function. Next, masks 101 for covering regions for forming the polarization portions are formed by etching.

As the material of the base material to be used as a mold, silicon, glass such as quartz, ceramics such as alumina and silicon carbide, and metals such as nickel can be used, and silicon is preferably used. In addition, a multilayer material having a metal layer, a semiconductor layer, or a dielectric layer formed on these materials may be used.

. In the step of Figure 5(b), the surface 100sf of the base material is etched, and portions covered with the masks 101 are left as convex portions 100cv.

As the etching method, chemical etching, mechanical processing, ion beam processing, laser processing, etc. can be used, and plasma etching is particularly preferable in terms of processing accuracy. Next, the masks 101 are removed. As a result, the portions covered with the masks remain on the base material 100a as the convex portions 100cv.

In the step shown in Figure 5(c), a photosensitive resin layer covering the surface of the base material 100a is formed. Next, the photosensitive resin layer is exposed by lithography based on the created design data that determines the width w, pitch P2, and thickness TH of the metal portions of the wire-grid structure of the polarization portion 12, and then the exposed photosensitive resin layer is removed to form a mask 102.

In the mask 102, grooves 102g for forming a wire-grid structure on the convex portions 100cv are formed in a slit shape. The mask 102 may be formed using a printing method, imprinting method, self-assembly technique using block copolymers, etc.

The step of forming the mask 102 in the step shown in Figure 5(c) may be performed simultaneously with the step of Figure 5(a) by employing a high-precision forming method, e.g., lithography. Alternatively, an ultraviolet curable resin may be applied to the surface of the base material 100a to form the grooves 102g of the wire-grid structure in the ultraviolet curable resin on the surfaces of the convex portions 100cv by using a mold having projections formed on the entire surface thereof.

. In the step of Figure 5(d), the base material 100a is etched using the mask 102 to form the pattern of the metal portions of the polarization portion on the surface of the base material. Thus, a mold 100b for manufacturing the gradient polarization element 110 is manufactured. As the etching method, chemical etching, mechanical processing, ion beam processing, laser processing, etc. can be used, and plasma etching is particularly preferred in terms of processing accuracy.

As a variation, the mold 100b shown in Figure 5(d) may be manufactured by first performing the steps of Figures 5(c) and 5(d) to form the pattern of the metal portions of the polarization portion on the surface of the base material and then performing the steps of Figure 5(a) and 5(b) to remove the base material other than portions which will become the polarization portions.

. In the step of Figure 5(e), the mold 100b is pressed against the target substrate 11b by the imprinting method to form the grooves in a slit-like pattern of the polarization portions in the surface of the substrate 11b. In the imprinting method, for example, thermoplastic resin or glass is used for the substrate 11b, and the mold 100b is pressed against the substrate 11b by heating the substrate 11b to a temperature higher than the glass transition temperature and applying pressure.

Alternatively, the mold 100b may be pressed against the substrate 11b by using a photocurable resin for the substrate 11 and then, the photocurable resin may be irradiated with ultraviolet light. The mold 100b may be used to form the slit-like pattern of the polarization portions in the surface of the substrate by the injection molding method. Although the mold release agent can be suitably selected according to the material of the mold 100b and the material of the substrate 11b, a fluorine mold release agent is preferable in terms of releasability. Depending on the material of the mold 100b and the material of the substrate 11b, a silicone mold release agent may be preferred.

. In the step of Figure 5(f), a metal material is filled into the grooves of the pattern of the substrate that will become the polarization portion to form metal portions 13.

Thereby, a gradient polarizing element 110 in which polarization portions 12a to 12c and substrate portions 11a other than these polarization portions are formed in the substrate 11 is formed. As the method for filling the grooves with the metal material, printing, physical vapor deposition, chemical vapor deposition and plating methods using metal ink may be used.

According to this manufacturing method, a large number of gradient polarization elements can be easily formed with one mold 100b.

As an alternative example of this manufacturing method, the grooves of the pattern that will become the polarization portion may be formed directly in the surface of the substrate 11 by lithography, focused ion beam method, self-assembly technique using nanoparticles or the like without using the mold 100b.

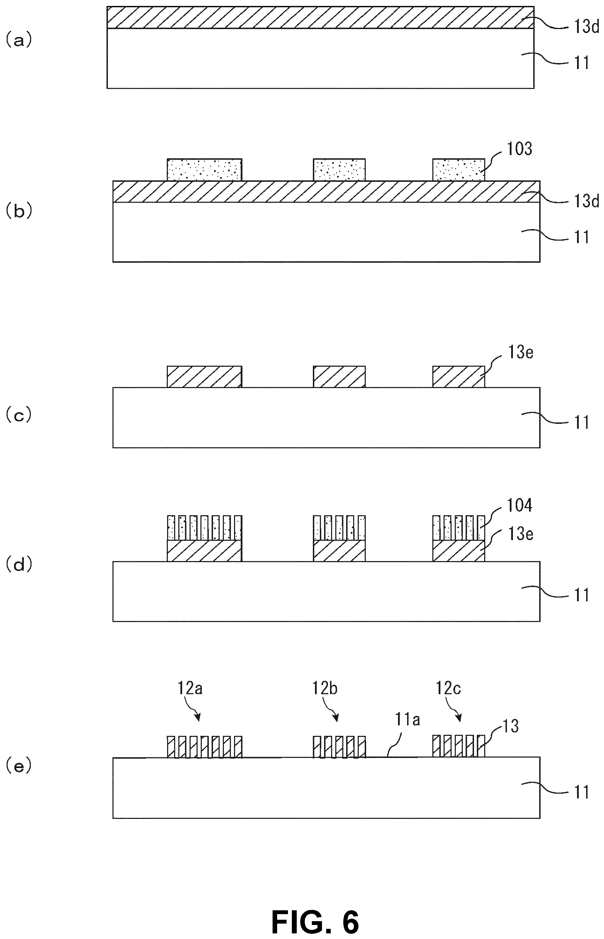

Figures 6(a) to 6(e) show another manufacturing process of the gradient polarizing element according to another embodiment of the present invention. Figures 6(e) is a BB line cross-sectional view of the above Figure 4 like Figures 5(f), and the polarization portion has the structure shown in the above Figure 3(a).

In the step of Figure 6(a), a metal layer 13d is formed on the substrate 11. The substrate 11 can be made of the same material as the substrate 11 of the gradient polarization element 10, and the metal layer 13d can be made of the same metal material as the metal portion 13 of the gradient polarization element. The metal layer 13d can be formed by using the method described in the step of Figure 5(f).

In the step of Figure 6(b), a photosensitive resin layer is formed on the metal layer 13d, and the exposure processing of the photosensitive resin layer is performed by lithography on the basis of the prepared design data on the arrangement of the polarization portions 12 based on the polarization portion occupancy ratio to form a gradation function.

Then, masks 103 are formed to cover regions for forming polarization portions by etching. The masks 103 may be formed by the printing method, imprinting method or self-assembly technology or the like.

In the step of Figure 6(c), the surface of the metal layer 13d that is not covered with the masks 103 is removed by etching. As an etching method, chemical etching, mechanical processing, ion beam processing, laser processing and the like can be used, and plasma etching is particularly preferable in view of processing accuracy.

Next, the masks 103 are removed. As a result, portions of the metal layer covered with the masks remain as convex portions 13e. As alternative examples of the manufacturing steps of Figures 6(a) to 6(c), the structure shown in Figure 6(c) may be formed by exchanging the manufacturing steps of Figure 6(a) and Figure 6(b) using the lift-off process.

In the step of Figure 6(d), a photosensitive resin layer covering the surfaces of the substrate 11 and the metal layers 13e is formed, the pattern of the metal portions of the polarization portion is exposed on the basis of the prepared design data which determines the width w, the pitch P2, and the thickness TH of the metal portions having a wire-grid structure of the polymerization portion, and then the exposed photosensitive resin layer is removed to form masks 104.

Slit-like grooves for forming a wire-grid structure are formed in the masks 104 on the convex portions 13e. The masks 104 may be formed using printing, imprinting, self-assembly technology, or the like. The steps of Figures 6(b) and 6(d) for forming the masks 103 and 104 may be performed simultaneously.

In the step of Figure 6(e), the pattern of the metal portions 13 of the polarization portions 12a to 12c is formed on the surface of the substrate 11 by etching the convex portions 13e of the metal layer using the masks 104. As a result, the gradient polarization element is formed.

As the etching method, chemical etching, mechanical processing, ion beam processing, laser processing and the like can be used, and plasma etching is particularly preferable in terms of processing accuracy.

As an alternative example of this manufacturing method, the pattern of the metal portions 13 of the polarization portions 12a to 12c may be formed on the surface of the substrate 11 first, and then the metal layer 13d of the substrate portions 11a other than the polarization portions 12a to 12c may be removed. That is, after the step of Figure 6(a), the steps of Figure 6(d) and Figure 6(e) are performed, and then the steps of Figures 6(b) and 6(c) are performed.

As another alternative example of the present manufacturing method, the convex portions 13e shown in Figure 6(c) may be formed on the metal layer 13d in Figure 6(b) by an electron beam using a stencil mask fabricated based on design data that determines the shape of the polarization portion and the polarization portion occupancy ratio to form a gradation function and further, the metal layer 13d of Figure 6(b) may be formed directly on the surface of the substrate 11 shown in Figure 6(e) to form the pattern of the metal portions 13 of the polarization portions 12a to 12c by an electron beam using a stencil mask fabricated based on design data including the design data that determines the width w, pitch P2 and thickness TH of the metal portions of the wire-grid structure of the polarization portions.

It is needless to say that, by combining the manufacturing steps described above, the polarization portion 32 having a wire-grid structure shown in Figure 3(b) can be formed.

Further, by using the manufacturing steps shown in Figures 6(a), 6(d) and (e), a gradient polarizing element having polymerization portions 12a to 12c may be manufactured by forming the pattern of the metal portions 13 of the polymerization portions having a wire-grid structure on the entire surface of the substrate 11 and then removing part of the pattern to form the substrate portions 11a shown in Figure 6(e).

As the method of removing the pattern, laser processing, press processing, plasma etching, chemical etching, ion beam processing, imprinting, drill processing, mechanical processing and the like can be used. The substrate portion 11a may be a through-hole penetrating the substrate.

According to this embodiment, since a large number of polarization portions 12 are arranged and formed on the substrate 11 based on the design data created by the design data preparation step for determining the specifications and arrangement of the polarization portions based on the polarization portion occupancy ratio of the polarization portions 12 in each region along the predetermined direction to achieve a desired gradation function, a polarizing element having a gradation function for at least one of light transmittance and polarization degree along the predetermined direction can be formed.

### [EXAMPLE]

A gradient polarization element was formed by the manufacturing process shown in the above Figures 5(a) to 5(e).

First, design data for the arrangement of the polarization portions was created so as to gradually decrease the polarization portion occupancy ratio in six regions along the X-axis shown in Figure 1 to form a gradation function, and the length and the pitch P1 in the longitudinal direction and the transverse direction of the polarization portion 12 were determined.

The polarization portions 12 were arranged in a square array. The width w, pitch P2, and thickness TH of the metal portion of the wire-grid structure of the polarization portion 12 were set to 50nm, 140nm, and 400nm, respectively.

Then, the convex portions 100cv shown in Figure 5(b) were formed on the surface of a 4-inch Si wafer by photolithography and anisotropic plasma etching.

Then, the mask 102 having slit-like grooves 102g for forming the wire-grid structure shown in Figure 5(c) was formed by nanoimprint lithography.

Then, using anisotropic plasma etching, the pattern 100sl of the metal portions of the polarization portion shown in Figure 5(d) was formed on the surface of the Si wafer with the mask 102 so as to fabricate the Si wafer mold 100b.

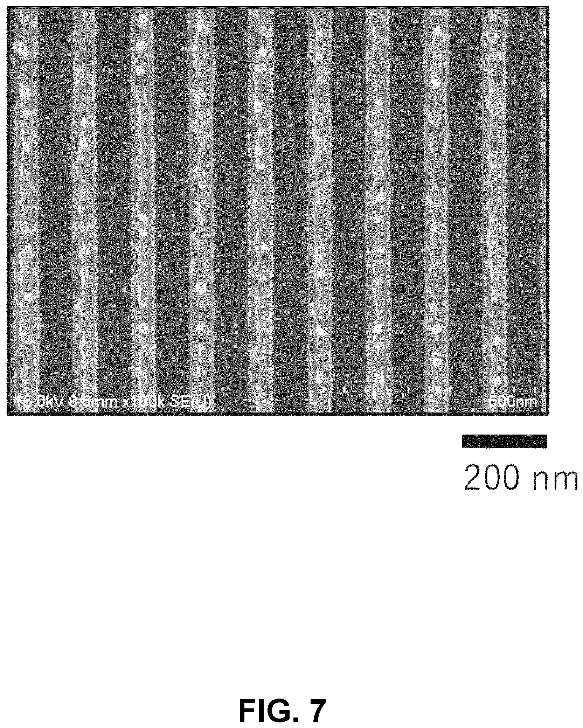

Figure 7 is a scanning photomicrograph of a mold for a gradient polarization element of this example.

Referring to Figure 7, it can be seen that the mold has the width and pitch of the protrusion portions for forming the metal portions of the pattern 100sl of the mold are 50 nm and 140 nm, respectively.

. Then, using the thermal nanoimprinting method, the pattern of the grooves shown in Figure 5 (f) was formed by heating the polycarbonate sheet as the substrate 11 to 170°C and pressing the mold against it.

Then, silver nano-ink (product name: NPS) manufactured by HARIMA CHEMICALS GROUP, INC. was filled into the grooves of the polycarbonate sheet by the squeezing method, and excessive silver nano-ink on the surface was removed by wiping.

Then, using an oven, the polycarbonate sheet was heated at 130°C for 12 hours to sinter the silver nano-ink. As a result, the gradient polarization element of the example was fabricated.

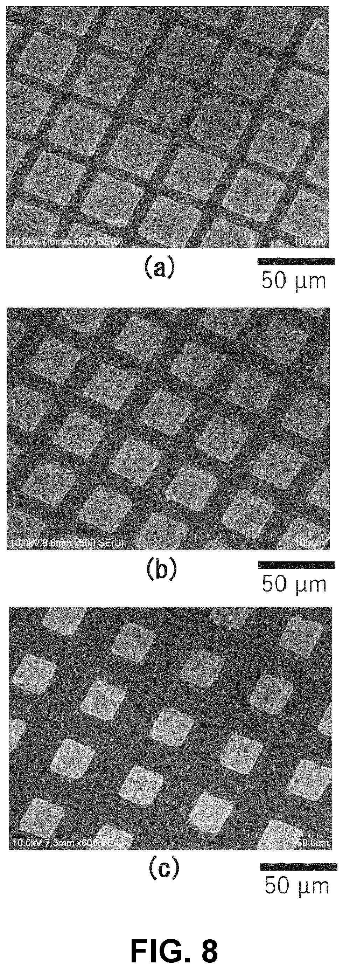

Figures 8(a) to 8(c) are scanning photomicrographs of a gradient polarization element as an example. Referring to Figures 8(a) to 8(c), rectangular portions with relatively bright contrast are polarization portions and relative dark portions between adjacent rectangles are substrate portions other than the polarization portions. It is understood from these scanning photomicrographs that regions (a), (b) and (c) having polarization portion occupancy rations of 64%, 36% and 20% were formed, respectively.

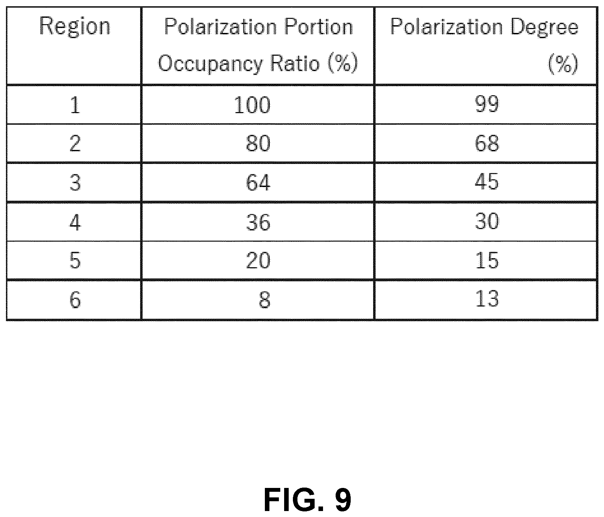

Figure 9 shows the optical characteristics of the gradient polarization element of this example which were measured by irradiating incident light having a spot diameter of 2mm to the gradient polarization element using a spectrophotometer. The incident light had a spot diameter of 2mm at the position of the gradient polarization element.

The polarization degree and visual transmittance of the gradient polarization element were measured by a spectrophotometer (SolidSpec-3700) manufactured by Shimadzu Corporation, using linearly polarized incident light having electric field components oscillating in the parallel direction (Y-axis direction in Figure 2(a)) and the perpendicular direction (X-axis direction in Figure 2(a)), respectively, to the metal portions 13 of the wire-grid structure shown in Figures 2(a) and 2(b).

The visual transmittance can be obtained from transmittances (transmission spectra) at wavelengths of 380 to 780 nm (in 1nm increments) and visual sensitivity curve.

Assuming that the visual transmittance of the gradient polarization element for polarized light rays in the parallel direction to the metal portion 13 of the wire-grid structure is Tp and that for polarized light rays in the perpendicular direction is Tv, the polarization degree V is expressed as V = ((Tv-Tp)/(Tv+Tp))^{1/2}

Referring to Figure 9, it can be understood that the gradient polarization element of this example has a gradation function for polarization degree since the polarization degree V gradually decreases from 99% to 13% in the region 1 having a polarization portion occupancy ratio of 100 % to the region 6 having a polarization portion occupancy ratio of 8 %.

While preferred embodiments of the present invention have been described in detail, it is to be understood that the present invention is not limited to the specific embodiments thereof and various changes and modifications may be made within the scope of the invention as set out in the accompanying claims. For example, although the substrate 11 has been described in the above embodiments as having no polarization function, it may have a polarization function as long as it has the gradation function of the present invention.

Although the plurality of polarization portions 12 have been described as having the metal portions 13 extending in a direction (Y-axis direction) perpendicular to the gradation direction (X-axis direction) of the polarization degree, the extending direction of the metal portions 13 is not limited to the perpendicular direction.

Since the gradient polarization elements of the present invention can also control the gradation of polarization degree, they are expected to be used in head-up displays that ensure both visibility and display functions, displays with advanced security measures such as the prevention of prying eyes from the surroundings through advanced polarization control, and amusement equipment such as glasses for 3-D TV and to expand the design and functionality.

### DESCRIPTION OF THE SIGN

10, 110 gradient polarization element
11 substrate
11a substrate portion
12, 22, 32 polarization portion
13, 23, 33 metal portion

## Claims

1. A polarization element (10) comprising
a substrate (11) having a predetermined light transmittance in a predetermined wavelength region,
a plurality of polarization portions (12; 22; 32) disposed on the main surface of the substrate (11), each of which has the same wire grid structure including a pattern comprising a metallic material, the pattern extending in one direction and being periodic with a pitch (P2), and
substrate portions (11a) which are parts of the substrate (11) where the plurality of polarization portions (12; 22; 32) are not disposed,
wherein the plurality of polarization portions (12; 22; 32) are placed away from each other by the substrate portions (11a) along a predetermined direction
**characterized in that**
said plurality of polarization portions are arranged to ensure that a polarization portion occupancy ratio, defined as the ratio of the total area of the plurality of polarization portions (12; 22; 32) included within a unit area of the polarization element (10) to the unit area, gradually changes along the predetermined direction so that at least one of light transmittance and polarization degree gradually changes in the predetermined direction on the main surface of the substrate (11).

2. The polarization element (10) according to claim 1, wherein the pattern has the same width (w), the same pitch (P2) and the same thickness (TH).

3. The polarization element (10) according to claim 1 or 2, wherein the plurality of polarization portions (12; 22; 32) are made different in size along the predetermined direction to change the polarization portion occupancy ratio.

4. The polarization element (10) according to any one of claims 1 to 3, wherein the number of the polarization portions (12; 22; 32) is varied along the predetermined direction to change the polarization portion occupancy ratio.

5. The polarization element (10) according to any one of claims 1 to 4, wherein the plurality of polarization portions (12; 22; 32) are arranged at predetermined intervals along a direction perpendicular to the predetermined direction and placed away from each other.

6. The polarization element (10) according to any one of claims 1 to 5, wherein the plurality of polarization portions (12; 22; 32) are regularly arranged along a direction perpendicular to the predetermined direction.

7. A polarization element, comprising:
a substrate (11) having a predetermined light transmittance in a predetermined wavelength region,
a plurality of polarization portions with a wire-grid structure disposed over a main surface of the substrate (11), the wire-grid structure having the same configuration throughout the polarization element (10) and including a pattern comprising a metallic material, the pattern extending in one direction and being periodic with a pitch (P2), and
a plurality of non-polarization portions which are part of the substrate (11),
wherein the plurality of non-polarization portions are placed away from each other by the plurality of polarization portions along a predetermined direction
**characterized in that**
said plurality of non-polarization portions are arranged to ensure that a non-polarization portion occupancy ratio, defined as the ratio of the total area of the plurality of non-polarization portions included within a unit area of the polarization element (10) to the unit area, gradually changes along the predetermined direction on the main surface of the substrate (11), so that at least one of light transmittance and polarization degree gradually changes in the predetermined direction on the main surface of the substrate (11).

8. A method for manufacturing a polarization element (10) in which at least one of light transmittance and polarization degree gradually changes in a predetermined direction, comprising the steps of:
creating design data for:
placing a plurality of polarization portions (12; 22; 32) having a wire-grid structure,
defining substrate portions (11a) which are parts of a substrate (11) where the plurality of polarization portions (12; 22; 32) are not disposed, the plurality of polarization portions (12; 22; 32) being placed away from each other by substrate portions (11a) along the predetermined direction, and
arranging the plurality of polarization portions (12; 22; 32) to ensure that a polarization portion occupancy ratio, defined as the ratio of the total area of the plurality of polarization portions included within a unit area of the polarization element (10) to the unit area, gradually changes along the predetermined direction on a main surface of the substrate (11), each polarization portion (12; 22; 32) having the same wire-grid structure including a pattern comprising a metallic material, the pattern extending in one direction and being periodic with a pitch (P2), and
forming the plurality of polarization portions (12; 22; 32) on the main surface of the substrate (11) based on the design data.

9. The method for manufacturing according to claim 8, wherein the pattern has the same width (w), the same pitch (P2) and the same thickness (TH).

## Patentansprüche

1. Polarisationselement (10), aufweisend:
ein Substrat (11) mit einer vorbestimmten Lichtdurchlässigkeit in einem vorbestimmten Wellenlängenbereich,
mehrere Polarisationsabschnitten (12; 22; 32), die auf der Hauptfläche des Substrats (11) angeordnet sind, von denen jeder dieselbe Drahtgitterstruktur aufweist, die ein Muster aufweist, das ein metallisches Material umfasst, wobei sich das Muster in einer Richtung erstreckt und mit einem Rastermaß (P2) periodisch ist, und
Substratabschnitte (11a), die Teile des Substrats (11) sind, in denen die mehreren Polarisationsabschnitte (12; 22; 32) nicht angeordnet ist,
wobei die mehreren Polarisationsabschnitte (12; 22; 32) durch die Substratabschnitte (11a) entlang einer vorbestimmten Richtung voneinander beabstandet sind,
**dadurch gekennzeichnet, dass**
die mehreren Polarisationsabschnitte so angeordnet sind, um sicherzustellen, dass sich ein Polarisationsabschnitt-Belegungsverhältnis, das als das Verhältnis der Gesamtfläche der in einer Flächeneinheit des Polarisationselements (10) enthaltenen mehreren Polarisationsabschnitte (12; 22; 32) zu der Flächeneinheit definiert ist, entlang der vorbestimmten Richtung allmählich ändert, sodass sich entweder Lichtdurchlässigkeit oder Polarisationsgrad in der vorbestimmten Richtung auf der Hauptfläche des Substrats (11) allmählich ändert.

2. Polarisationselement (10) nach Anspruch 1, wobei das Muster dieselbe Breite (w), dasselbe Rastermaß (P2) und dieselbe Dicke (TH) aufweist.

3. Polarisationselement (10) nach Anspruch 1 oder 2, wobei die mehreren Polarisationsabschnitte (12; 22; 32) entlang der vorbestimmten Richtung unterschiedlich groß ausgebildet sind, um das Polarisationsabschnitt-Belegungsverhältnis zu ändern.

4. Polarisationselement (10) nach einem der Ansprüche 1 bis 3, wobei die Anzahl der Polarisationsabschnitte (12; 22; 32) entlang der vorbestimmten Richtung variiert wird, um das Polarisationsabschnitt-Belegungsverhältnis zu ändern.

5. Polarisationselement (10) nach einem der Ansprüche 1 bis 4, wobei die mehreren Polarisationsabschnitte (12; 22; 32) in vorbestimmten Abständen entlang einer Richtung senkrecht zu der vorbestimmten Richtung angeordnet und voneinander beabstandet sind.

6. Polarisationselement (10) nach einem der Ansprüche 1 bis 5, wobei die mehreren Polarisationsabschnitte (12; 22; 32) regelmäßig entlang einer Richtung senkrecht zu der vorbestimmten Richtung angeordnet sind.

7. Polarisationselement, aufweisend:
ein Substrat (11) mit einer vorbestimmten Lichtdurchlässigkeit in einem vorbestimmten Wellenlängenbereich,
mehrere Polarisationsabschnitte mit einer Drahtgitterstruktur, die über einer Hauptfläche des Substrats (11) angeordnet sind, wobei die Drahtgitterstruktur über das gesamte Polarisationselement (10) hinweg dieselbe Konfiguration aufweist und ein Muster umfasst, das ein metallisches Material umfasst, wobei sich das Muster in einer Richtung erstreckt und mit einem Rastermaß (P2) periodisch ist, und
mehrere Nicht-Polarisationsabschnitte, die Teil des Substrats (11) sind,
wobei die mehreren Nicht-Polarisationsabschnitte durch die mehreren Polarisationsabschnitte entlang einer vorbestimmten Richtung voneinander beabstandet sind,
**dadurch gekennzeichnet, dass**
die mehreren Nicht-Polarisationsabschnitte so angeordnet sind, um sicherzustellen, dass sich ein Nicht-Polarisationsabschnitt-Belegungsverhältnis, das als das Verhältnis der Gesamtfläche der in einer Flächeneinheit des Polarisationselements (10) enthaltenen mehreren Nicht-Polarisationsabschnitte zu der Flächeneinheit definiert ist, entlang der vorbestimmten Richtung auf der Hauptfläche des Substrats (11) allmählich ändert, sodass sich zumindest Lichtdurchlässigkeit oder Polarisationsgrad in der vorbestimmten Richtung auf der Hauptfläche des Substrats (11) allmählich ändert.

8. Herstellungsverfahren für ein Polarisationselement (10), bei dem sich zumindest Lichtdurchlässigkeit oder Polarisationsgrad in einer vorbestimmten Richtung allmählich ändert, das folgende Schritte umfasst:
Erstellen von Entwurfsdaten zum:
Platzieren mehrer Polarisationsabschnitte (12; 22; 32), die eine Drahtgitterstruktur aufweisen,
Definieren von Substratabschnitten (11a), die Teile eines Substrats (11) sind, in denen die mehreren Polarisationsabschnitte (12; 22; 32) nicht angeordnet ist, wobei die mehreren Polarisationsabschnitte (12; 22; 32) durch Substratabschnitte (11a) entlang der vorbestimmten Richtung voneinander beabstandet sind, und
Anordnen der mehreren Polarisationsabschnitte (12; 22; 32), um sicherzustellen, dass sich ein Polarisationsabschnitt-Belegungsverhältnis, das als das Verhältnis der Gesamtfläche der in einer Flächeneinheit des Polarisationselements (10) enthaltenen mehreren Polarisationsabschnitte zu der Flächeneinheit definiert ist, entlang der vorbestimmten Richtung auf einer Hauptfläche des Substrats (11) allmählich ändert, wobei jeder Polarisationsabschnitt (12; 22; 32) dieselbe Drahtgitterstruktur aufweist, die ein Muster umfasst, das ein metallisches Material umfasst, wobei sich das Muster in einer Richtung erstreckt und mit einem Rastermaß (P2) periodisch ist, und
Ausbilden der mehreren Polarisationsabschnitte (12; 22; 32) auf der Hauptfläche des Substrats (11) basierend auf den Entwurfsdaten.

9. Herstellungsverfahren nach Anspruch 8, wobei das Muster dieselbe Breite (w), dasselbe Rastermaß (P2) und dieselbe Dicke (TH) aufweist.

## Revendications

1. Élément de polarisation (10) comprenant :
un substrat (11) ayant une transmittance lumineuse prédéterminée dans une région de longueur d'onde prédéterminée,
une pluralité de parties de polarisation (12 ; 22 ; 32) disposées sur la surface principale du substrat (11), chacune d'elles ayant la même structure de grille de fils comprenant un motif comprenant un matériau métallique, le motif s'étendant dans une direction et étant périodique avec un pas (P2), et
des parties de substrat (11a) qui sont des parties du substrat (11) où la pluralité de parties de polarisation (12 ; 22 ; 32) ne sont pas disposées,
dans lequel la pluralité de parties de polarisation (12 ; 22 ; 32) sont placées à distance les unes des autres par les parties de substrat (11a) le long d'une direction prédéterminée,
**caractérisé en ce que**
ladite pluralité de parties de polarisation est agencée pour garantir qu'un taux d'occupation de partie de polarisation, défini comme le rapport de la surface totale de la pluralité de parties de polarisation (12 ; 22 ; 32) incluse dans une surface unitaire de l'élément de polarisation (10) sur la surface unitaire, varie progressivement le long de la direction prédéterminée de sorte qu'au moins l'un parmi la transmittance lumineuse et le degré de polarisation varie progressivement dans la direction prédéterminée sur la surface principale du substrat (11).

2. Élément de polarisation (10) selon la revendication 1, dans lequel le motif présente la même largeur (w), le même pas (P2) et la même épaisseur (TH).

3. Élément de polarisation (10) selon la revendication 1 ou 2, dans lequel la pluralité de parties de polarisation (12 ; 22 ; 32) sont de dimensions différentes le long de la direction prédéterminée pour modifier le taux d'occupation de partie de polarisation.

4. Élément de polarisation (10) selon l'une quelconque des revendications 1 à 3, dans lequel le nombre de parties de polarisation (12 ; 22 ; 32) varie le long de la direction prédéterminée pour modifier le taux d'occupation de partie de polarisation.

5. Élément de polarisation (10) selon l'une quelconque des revendications 1 à 4, dans lequel la pluralité de parties de polarisation (12 ; 22 ; 32) sont agencées à des intervalles prédéterminés le long d'une direction perpendiculaire à la direction prédéterminée et placées à distance les unes des autres.

6. Élément de polarisation (10) selon l'une quelconque des revendications 1 à 5, dans lequel la pluralité de parties de polarisation (12 ; 22 ; 32) sont régulièrement agencées le long d'une direction perpendiculaire à la direction prédéterminée.

7. Élément de polarisation, comprenant :
un substrat (11) ayant une transmittance lumineuse prédéterminée dans une région de longueur d'onde prédéterminée,
une pluralité de parties de polarisation présentant une structure de grille de fils disposées sur une surface principale du substrat (11), la structure de grille de fils présentant la même configuration dans tout l'élément de polarisation (10) et incluant un motif comprenant un matériau métallique, le motif s'étendant dans une direction et étant périodique avec un pas (P2), et
une pluralité de parties de non-polarisation qui font partie du substrat (11),
dans lequel la pluralité de parties de non-polarisation sont placées à distance les unes des autres par la pluralité de parties de polarisation le long d'une direction prédéterminée,
**caractérisé en ce que**
ladite pluralité de parties de non-polarisation est agencée pour garantir qu'un taux d'occupation de partie de non-polarisation, défini comme le rapport de la surface totale de la pluralité de parties de non-polarisation incluse dans une surface unitaire de l'élément de polarisation (10) sur la surface unitaire, varie progressivement le long de la direction prédéterminée sur la surface principale du substrat (11), de sorte qu'au moins l'un parmi la transmittance lumineuse et le degré de polarisation varie progressivement dans la direction prédéterminée sur la surface principale du substrat (11).

8. Procédé de fabrication d'un élément de polarisation (10) dans lequel au moins l'un parmi la transmittance lumineuse et le degré de polarisation varie progressivement dans une direction prédéterminée, comprenant les étapes de :
créer des données de conception pour :
placer une pluralité de parties de polarisation (12 ; 22 ; 32) présentant une structure de grille de fils,
définir des parties de substrat (11a) qui sont des parties d'un substrat (11) où la pluralité de parties de polarisation (12 ; 22 ; 32) ne sont pas disposées, la pluralité de parties de polarisation (12 ; 22 ; 32) étant placées à distance les unes des autres par des parties de substrat (11a) le long de la direction prédéterminée, et
agencer la pluralité de parties de polarisation (12 ; 22 ; 32) pour garantir qu'un taux d'occupation de partie de polarisation, défini comme le rapport de la surface totale de la pluralité de parties de polarisation incluse dans une surface unitaire de l'élément de polarisation (10) sur la surface unitaire, varie progressivement le long de la direction prédéterminée sur une surface principale du substrat (11), chaque partie de polarisation (12 ; 22 ; 32) présentant la même structure de grille de fils incluant un motif comprenant un matériau métallique, le motif s'étendant dans une direction et étant périodique avec un pas (P2), et
former la pluralité de parties de polarisation (12 ; 22 ; 32) sur la surface principale du substrat (11) sur la base des données de conception.

9. Procédé de fabrication selon la revendication 8, dans lequel le motif présente la même largeur (w), le même pas (P2) et la même épaisseur (TH).
